Europäisches Patentamt

European Patent Office

Office européen des brevets

(19)

(11) Veröffentlichungsnummer: **0 261 618 B1**

# EUROPÄISCHE PATENTSCHRIFT

(12)

(45) Veröffentlichungstag der Patentschrift: 23.10.91

(51) Int. Cl.⁵: **G06K 13/08**

(21) Anmeldenummer: 87113737.8

(22) Anmeldetag: 19.09.87

(54) **Verkaufs- und/oder Dienstleistungsautomat und Identifikationsmittel für die Benutzer von Verkaufs- und/oder Dienstleistungsautomaten.**

(30) Priorität: 25.09.86 CH 3846/86

(43) Veröffentlichungstag der Anmeldung:
30.03.88 Patentblatt 88/13

(45) Bekanntmachung des Hinweises auf die
Patenterteilung:
23.10.91 Patentblatt 91/43

(84) Benannte Vertragsstaaten:
AT BE DE FR GB IT NL SE

(56) Entgegenhaltungen:
CH-A- 628 170
FR-A- 2 552 252
FR-A- 2 561 292
US-A- 4 236 667
US-A- 4 492 855

IBM TECHNICAL DISCLOSURE BULLETIN,
Band 27, Nr. 7B, Dezember 1984, Seiten
4314-4315, New York, US; G.E. DOODY et al.:
"Captured badge reader"

IBM TECHNICAL DISCLOSURE BULLETIN,
Band 24, Nr. 7B, Dezember 1981, Seite 3882,
New York, US; Y.J. VAN DER MEULEN:
"Asymmetrical card"

(73) Patentinhaber: **Microtronic AG**
**Dünnernstrasse 24**
**CH-4702 Oensingen(CH)**

(72) Erfinder: **Marmet, Jakob**
**Aebnit**
**CH-3510 Konolfingen(CH)**
Erfinder: **Marmet, Stefan**
**Kehlenstrasse 1013**
**CH-5712 Beinwil am See(CH)**
Erfinder: **Kappeler, Anton**
**Büschiackerstrasse 43**
**CH-3098 Schliern(CH)**

(74) Vertreter: **Keller, René, Dr. et al**
**Patentanwälte Hartmut Keller, Dr. René Keller Postfach 12**
**CH-3000 Bern 7(CH)**

## Beschreibung

Die Erfindung bezieht sich auf einen Verkaufs- und/oder Dienstleistungsautomaten der im Oberbegriff des Patentanspruchs 1 angegebenen Gattung und auf ein Identifikationsmittel für dessen Benutzer.

Verkaufs - und/oder Dienstleistungsautomaten der Art, die mit Daten tragenden Identifikations mitteln benützt werden, sind für sehr viele, verschiedene Zwecke bekannt, wobei die Datenverarbeitungseinrichtung zahlreiche Aufgaben im Interesse des Betreibers und der Benutzer der Automaten in bekannter Weise erfüllen kann. Dabei kann die Datenverarbeitungseinrichtung ihre Aufgaben nur erfüllen, wenn das zur Benutzung des Automaten in diesen eingeführte Identifikationsmittel während des Lesens und gegebenenfalls Aenderns seiner Daten im Automaten bleibt und nicht vorzeitig aus diesem zurückgezogen wird. Abgesehen von Missbrauchsversuchen neigen die Benutzer oft dazu, das Identifikationsmittel kurz nach dem Einführen wieder zurückzuziehen, insbesondere nach einer erkennbaren Reaktion des Automaten.

Aus der US-A-4 492 855 ist eine Identifikationskarten-Lesevorrichtung für Automaten bekannt, mit der ein unerwünschtes Herausziehen einer in die Lesevorrichtung eingeführten Karte verhindert werden kann. Bei dieser bekannten Vorrichtung sind zwei Kugeln unmittelbar an den Karteneinführungsschlitz anschliessend so angeordnet, dass sie einander in der Einführungsebene berühren. Eine der Kugeln ist nachgiebig abgestützt, und die andere Kugel ist mittels einer Schubkurve in Richtung auf die nachgiebig abgestützte Kugel verschiebbar, um die zwischen den Kugeln eingeführte Karte festzuklemmen. Mit dieser Lesevorrichtung kann weder eine bestimmte Lage der festgeklemmten Karte sichergestellt noch eine Verschiebung der festgeklemmten Karte, die nur durch Haftreibung an äusserst kleinen Kugelflächenteilen gehalten ist, zuverlässig verhindert werden.

Aus IBM TECHNICAL DISCLOSURE BULLETIN, Band 27, Nr. 7B, Dezember 1984, Seiten 4314-4315, ist eine Identifikationskarten-Lesevorrichtung für gattungsmässig andere Automaten bekannt. Bei dieser bekannten Vorrichtung passiert die mit einem Loch versehene Karte beim Einführen einen Lesekopf und stösst einen Schlitten gegen die Kraft einer Rückholfeder vor sich her. Am Schlitten ist ein mondsichelförmiger Arm drehbar gelagert, der beim Vorschub und Rückzug des Schlittens an einer ortsfesten Steuerkurve gleitet und dadurch so geschwenkt wird, dass sein Ende am Anfang des Vorschubs in das Loch der Karte greift und sich am Ende des Rückzugs von der Karte löst, so dass diese beim Vorschub und Rückzug am Schlitten gehalten ist. Wenn die Karte den Lesekopf passiert hat, stösst der Schlitten am Ende der Vorschubstrecke an einen Endanschlag, an dem ein von der Datenverarbeitungseinrichtung steuerbarer Arretierhebel angeordnet ist, mit dem der Schlitten am Endanschlag festgehalten werden kann, wobei die vom dem monsichelförmigen Arm am Schlitten gehaltene Karte nicht zurückgezogen werden kann. Nach Lösen des Arretierhebels zieht die Rückholfeder den Schlitten zurück, wobei der Schlitten die Karte zurückstösst, der gekrümmte Arm sich von der Karte löst, und die Karte schliesslich ausgestossen wird.

Es sind auch Automaten, insbesondere zur Ausgabe von Banknoten an die Inhaber von Identifikationskarten im Gebrauch, bei denen die Identifikationskarte von Hand teilweise einzuführen ist, dann von einem Transportmechanismus vollständig in den Automaten hinein gezogen und schliesslich so weit wieder zurückgeschoben wird, dass sie von Hand erfasst und herausgezogen werden kann. Dabei kann die Karte nicht vorzeitig zurückgezogen werden. Jedoch bedingt dies einen aufwendigen, entsprechend störanfälligen Transportmechanismus, und missbräuchliches Einführen von Fremdkörpern oder Automatenmissbrauchsversuche führen zu aufwendigen Störungsbeseitigungen bzw. Reparaturen. Auch setzen solche Automaten voraus, dass die Identifikationskarte völlig selbständig ist, d.h. z.B., nicht an einem Schlüsselring hängt.

Ein Automat gemäß dem Oberbegriff von Anspruch 1 ist aus der US-A-4 236 667 bekannt.

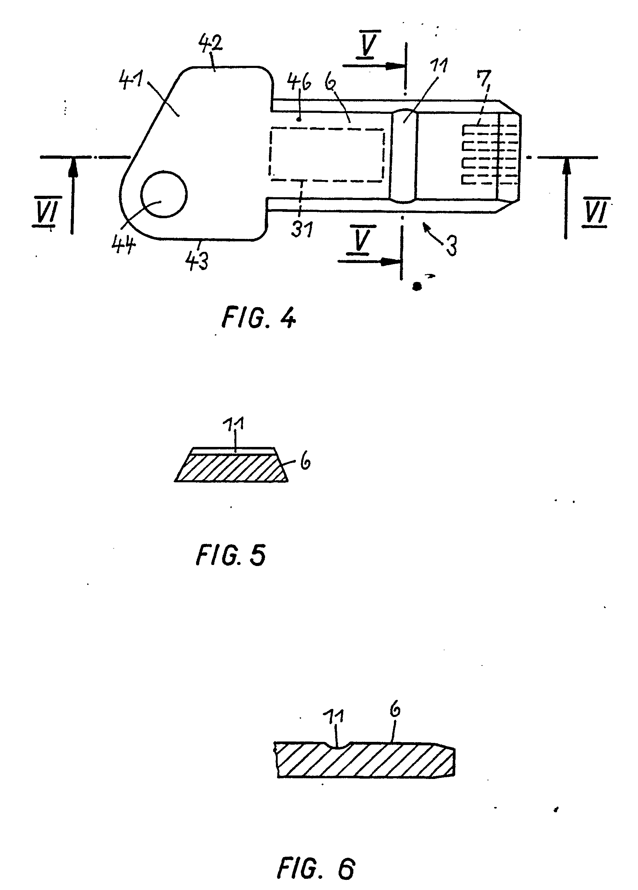

Bei dem Automaten nach diesem Dokument ist jedes der Eingriffsglieder 42 am Ende eines Kontaktarmes 40 (zum Gegenkontakt 46) gebildet. Die Karte 74 wird beim Einführen auf eine Aufnahmefläche 52 eines Schlittens 18 geschoben, sie stösst dann an einem Anschlag 54 des Schlittens 18 an (Fig. 4) und nimmt den Schlitten 18 gegen die Kraft einer Rückholfeder 60 mit. Der Schlitten 18 gleitet auf einer schiefen Ebene, die in Einführrichtung der Karte 74 ansteigt. Dadurch wird die Karte 74 am Ende des Vorschubweges so weit gehoben, dass diejenigen Eingriffsglieder 42, denen kein Loch 76 in der Karte 74 zugeordnet ist, gehoben werden, wodurch der zugeordnete Kontakt 40/46 geöffnet wird, während die anderen Eingriffsglieder 42, denen ein Loch 76 in der Karte 74 zugeordnet ist, in das Loch greifen, so dass sie nicht gehoben werden und der zugeordnete Kontakt 40/46 geschlossen bleibt. Dabei ist das innere Ende der Karte 74 in deren Endlage von einer Blattfeder 62, 66, 68, die auf eine Stellschraube 28 aufgelaufen ist, so fest an die obere Begrenzung 20 des Einführschlitzes 16 gepresst, dass die Haftreibung zwischen dem Ende der Karte 74 und der oberen Begrenzung 20 des Einführschlitzes 16 die Kraft überschreitet, welche die Rückholfeder 60 auf den Schlitten 18 in Rückzugrichtung ausübt, dessen Anschlag 54 die Karte 74 nicht verlassen hat. Dadurch ist die Karte 74 in ihrer Endlage festgehalten. Durch einen zusätzlich von Hand auf den Schlitten 18 ausgeübten Zug kann die Haftreibung überwunden werden, woraufhin die Rückholfeder 60 den Schlitten 18 mit der Karte 74 zurückstösst, um diese zurückzugeben. Das ist jederzeit auf genau dieselbe Weise und mit derselben Zugkraft möglich. Insbesondere kann ein vorzeitiges Zurückziehen der Karte nicht verhindert werden.

Durch die Erfindung, wie sie im Patentanspruch 1 gekennzeichnet ist, wird die Aufgabe gelöst, einen Automaten der eingangs genannten Gattung zu schaffen, in dem das eingeführte Identifikationsmittel während des Lesens und gegebenenfalls Aenderns seiner Daten zuverlässig in einer dazu vorgesehenen Lage festgehalten werden, kann, um ein vorzeitiges Zurückziehen des Identifikationsmittels zu erschweren. Dabei ist die Belastung des Haltegliedes während des Lesens und gegebenenfalls Aenderns der Daten des Identifikationsmittels so bemessen, dass dasselbe nur unter Anwendung einer Kraft, die der Benutzer ohne weiteres als nicht angemessen empfindet, zurückgezogen werden kann, und dass ein solches, gewaltsames Zurückziehen noch nicht zu einer Beschädigung des Identifikationsmittels und der dieses im Automaten haltenden Teile führt.

Die durch die Erfindung erreichten Vorteile sind im wesentlichen darin zu sehen, dass das Identifikationsmittel beim Lesen und gegebenenfalls Aendern seiner Daten zuverlässig in der dazu vorgesehenen Lage im Automaten gehalten wird, so dass die Arbeitsweise der Datenverarbeitungseinrichtung nicht durch Lageänderungen oder vorzeitiges Zurückziehen des Identifikationsmittels gestört werden kann. Trotzdem können, wie zuvor erwähnt, Beschädigungen durch gewaltsames Zurückziehen vermieden werden. Da das Identifikationsmittel nicht vollständig in den Automaten eingeführt zu werden braucht, kann es beispielsweise an einem Schlüsselring hängen.

Gegenstand des Patentanspruchs 8 ist ein Identifikationsmittel für die Benutzer des Automaten nach Patentanspruch 1. Ein Identifikationsmittel gemäß dem Oberbegriff von Anspruch 8 ist aus der FR-A-2 561 292 bekannt Weiterbildungen des erfindungsgemässen Automaten und des erfindungsgemässen Identifikationsmittels sind in den abhängigen Patentansprüchen angegeben, durch sie erzielte, weitere Vorteile gehen aus der folgenden Beschreibung hervor.

Im folgenden werden der erfindungsgemässe Automat und das erfindungsgemässe Identifikationsmittel anhand der beiliegenden, lediglich ein Ausführungsbeispiel darstellender Zeichnungen näher beschrieben. Es zeigen:

Fig. 1   einen Längsschnitt durch im Zusammenhang mit dem Einführen und Festhalten des Identifikationsmittels wesentliche Teile des Automaten,

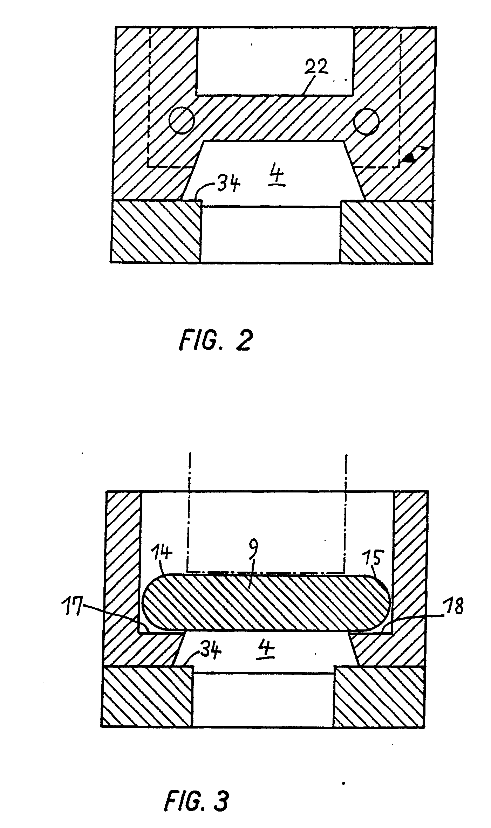

Fig. 2   einen Querschnitt nach der Linie II-II in Fig. 1,

Fig. 3   einen Querschnitt nach der Linie III-III in Fig. 1,

Fig. 4   eine Draufsicht auf ein Identifikationsmittel, für die Benutzer von Verkaufs- und/oder Dienstleistungsautomaten, in kleinerem Massstab,

Fig. 5   einen teilweisen Querschnitt nach der Linie V-V in Fig. 4, und

Fig. 6   einen teilweisen Längsschnitt nach der Lini VI-VI in Fig. 4.

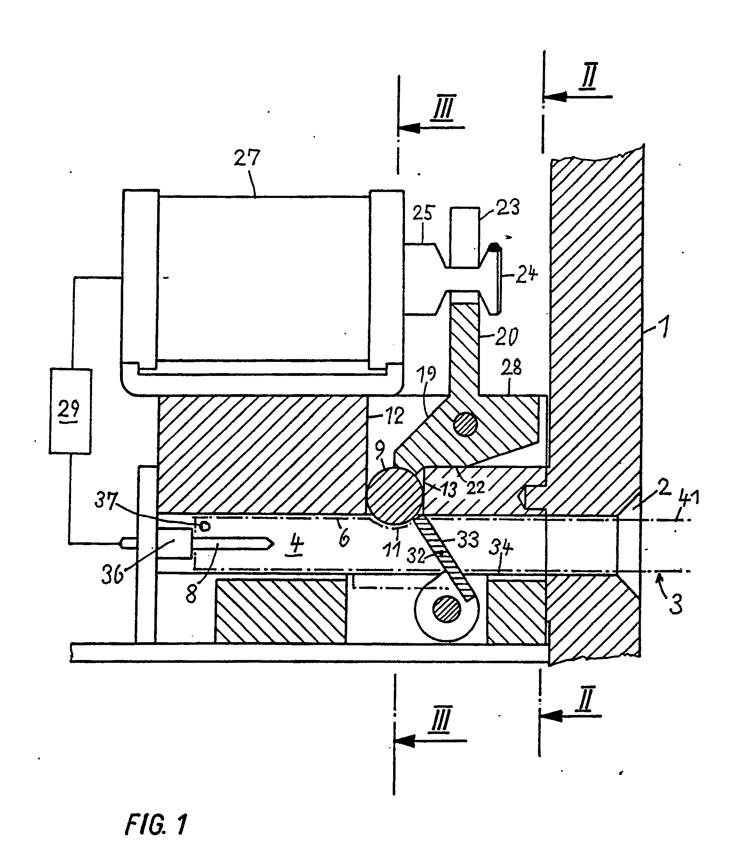

Die Vorderwand 1 des Automaten ist mit einer Einführungsöffnung 2 für das Identifikationsmittel 3 versehen. An die Oeffnung 2 schliesst ein Raum 4 zur Aufnahme des Teiles 6 des eingeführten Identifikationsmittels 3 an. Der Querschnitt des Raumes 4 ist dem Querschnitt des Teiles 6 des Identifikationsmittels 3 angepasst trapezförmig, wobei die grössere Abmessung des Trapezes horizontal verläuft. Infolge dieser Querschnittsform kann das Identifikationsmittel 3 nicht in oben/unten vertauschter Lage eingeführt werden. Das ist für die richtige Verbindung der weiter unten näher beschriebenen Kontakte 7 (Fig. 4) des Identifikationsmittels 3 mit ihnen zugeordneten Kontakten 8 des Automaten und für das Zusammenwirken eines Haltegliedes 9 mit einer am Teil 6 des Identifikationsmittels 3 vorgesehenen Rille 11 wesentlich. Das Halteglied 9 besteht aus einem zylindrischen, an seinen Stirnseiten sphärisch gewölbten Körper, der zwischen vertikalen Flächen 12 und 13 mit etwas Spiel angeordnet und an seinen den Raum 4 überragenden Enden 14 und 15 auf Stützflächen 17 und 18 so unterstützt ist, dass er in der dargestellten Lage teilweise in den Raum 4 hineinragt, um in die Rille 11 des in vorbestimmter Lage in diesen eingeführten Teiles 6 des Identifikationsmittels 3 zu greifen. In dieser Lage des Haltegliedes 9 stützt sich ein Arm 19 eines zweiarmigen Hebels 19/20 sowohl auf eine Fläche 22 als auch auf einen oberen Teil des Haltegliedes 9. Am gabelförmigen, freien Ende 23 des zweiten Hebelarmes 20 greift ein Ansatz 24 eines Tauchankers 25 eines Solenoids 27 an. Am Hebel 19, 20 ist ein Gegengewicht 28 gebildet. Am der Einführungsöffnung 2 gegenüberliegenden Ende ragen die Kontaktstifte 8in den Raum 4 hinein, die in dessen Längsrichtung angeordnet und mit der Datenverarbeitungseinrichtung 29 des Automaten verbunden sind. Wenn ein Identifikationsmittel 3 in den Raum 4 eingeführt ist, stecken die Kontaktstifte 8 in den Buchsen 7 (Fig. 4) des Identifikationsmittels 3, die mit dessen Datenträger 31 (Fig. 4) verbunden sind, so dass dieser dann an die Datenverarbeitungseinrichtung 29 angeschlossen ist. An der der Einführungsöffnung 2 zugewandten Seite der Stelle, an welcher das Halteglied 9 in seiner dargestellten Lage in den Raum 4 hineinragt, ist eine schwenkbare Klappe 32 angeordnet, die in Fig. 1 in Ruhelage ausgezogen dargestellt und z.B. gegen die Kraft einer (nicht dargestellten) Schraubenfeder in ihre strichpunktiert dargestellte Lage geschwenkt werden kann, in der ihre obere Fläche 33 in der unteren Begrenzungsebene 34 des Raumes 4 liegt. Vor einem Anschlag 36, an dem die Kontaktstifte 7 vorstehen, ist eine nur schematisch dargestellte Lichtschranke 37 angeordnet, deren Lichtstrahl unterbrochen ist, wenn der Teil 6 des Identifikationsmittels 3 in der für dessen Benutzung vorbestimmten Lage im Raum 4 ist.

Das Identifikationsmittel 3 weist einen flachen, zweckmässig aus Kunststoff bestehenden Körper mit dem im Querschnitt trapezförmigen, schmäleren Teil 6 und einem breiteren, als Handhabe 41 ausgeführten Teil auf, der an der Vorderwand 1 (Fig. 1) des Automaten vorsteht, wenn das Identifikationsmittel 3 in vorbestimmter Lage in den Automaten eingeführt ist. Der Teil 6 ist an einer Seite mit der quer zu seiner Längsrichtung verlaufenden Rille 11, deren Krümmungsradius dem des Haltegliedes 9 angepasst ist, und an der gegenüberliegenden Seite mit dem Datenträger 31 versehen und hat am freien Ende einen Hohlraum, in dem die Buchsen 7 angeordnet sind, die in Längsrichtung des Teils 5 verlaufen. Die Handhabe 41 hat eine kürzere und eine längere Längsseite 42 und 43 und ist neben der letzteren mit einem Loch 44 versehen, mit dem das Identifikationsmittel 3 an einen Schlüsselbund gehängt werden kann, um jederzeit verfügbar zu sein. Indem das Trapezprofil des Teiles 6 des Identifikationsmittels 3 und des Raumes 4 (Fig. 1) so gerichtet ist, dass die mit dem Loch 44 versehene Seite 43 der Handhabe 41 bei in den Automaten eingeführtem Identifikationsmittel 3 rechts ist, kann dasselbe von einem Rechtshänder bequem in der zum Einführten in die Einführungsöffnung 2 (Fig. 1) richtigen Lage erfasst, eingeführt und zurückgezogen werden.

Zur Benutzung des Automaten führt der dazu Befugte sein Identifikationsmittel 3 durch die Einführungsöffnung 2 in den Raum 4 ein. Wegen der Lage der Trapeze des Querschnitts des Teiles 6 des Identifikationsmittels 3 und des Raumes 4 ist dies nur möglich, wenn das Identifikationsmittel 3 mit der Seite 46 nach oben gehalten wird, und dies ist wegen der Form der Handhabe 20 für einen Benutzer (Rechtshänder) die bequemere Haltung. Beim Einführen des Identifikationsmittels 3 gibt die Klappe 32 nach und schwenkt in ihre strichpunktiert dargestellte Lage. Danach wird das Halteglied 9 vorübergehend zurückgedrängt (das Solenoid 27 ist im Ruhezustand nicht erregt) und greift in die Rille 11, wenn der Teil 6 des Identifikationsmittels 3 seine vorbestimmte Lage im Raum 4 erreicht. Gleichzeitig spricht die Lichtschranke 37 an, dadurch wird die Erregung des Solenoids 27 eingeschaltet, das den Tauchanker 25 anzieht, der so auf den Hebel 19, 20 wirkt, dass das Halteglied 9 in der in Fig. 1 dargestellten Lage, in der es mit wenig Spiel in die Rille 11 des Teiles 6 des Identifikationsmittels 3 hineingreift, an seine Stützfläche 17 und 18 gepresst ist. Die in die Buchsen 7 greifenden Kontaktstifte 8 verbinden den Datenträger 31 des Identifikationsmittels 3 mit der Datenverarbeitungseinrichtung 29 des Automaten, die in bekannter Weise prüft, ob der Inhaber des Identifikationsmittels 3 zur Benutzung des Automaten befugt ist und gegebenenfalls in welchem Umfang. Dazu kann es zusätzlich erforderlich sein, dass der Benutzer einen ihm persönlich zugeordneten Code an einer (nicht dargestellten) Tastatur des Automaten eingibt, um einem Missbrauch des Identifikationsmittels in üblicher Weise vorzubeugen. Da das Halteglied 9 mit Spiel in der Rille 11 gehalten ist, wird das Identifikationsmittel 3 nicht beansprucht. Die Anziehungskraft des Solenoids 27 und die Hebelarme 19, 20 sind so bemessen, dass das Identifikationsmittel so fest gehalten ist, dass es nur unter Anwendung einer Kraft, die der Benutzer ohne weiteres als nicht angemessen empfindet, zurückgezogen werden kann, und dass ein gewaltsames Zurückziehen noch nicht zu einer Beschädigung des Identifikationsmittels 3 und der diese im Automaten haltenden Teile führt. Wenn die Vorgänge in der Datenverarbeitungseinrichtung 29 soweit fortgeschritten sind, dass die Anwesenheit des Identifikationsmittels 3 im Automaten nicht mehr erforderlich ist, veranlasst diese Einrichtung 29, dass das Solenoid 27 ausgeschaltet wird, woraufhin das Identifikationsmittel 3 leicht durch die Einführungsöffnung 2 herausgezogen werden kann, wobei das nun nicht mehr durch den Hebelarm 19 belastete Halteglied 9 vorübergehend zurückweicht und die Klappe 32 in ihre ausgezogen dargestellte Lage zurückschwenkt.

Sollte ein Benutzer das Identifikationsmittel 3 vorzeitig mit Gewalt herausziehen, beispielsweise in der Absicht, eine Aenderung des in den Daten des Datenträgers 31 enthaltenen Saldos zu verhindern, so können für diesen Fall vorgesehene Vorgänge der Datenverarbeitungseinrichtung ausgelöst werden, wenn die Lichtschranke 37 auf das Herausziehen des Identifikationsmittels 3 anspricht (oder die Kontakte 7 und 8 voneinander gelöst werden), während das Solenoid 27 erregt ist.

Der Verkaufsautomat kann z. B. ein Verpflegungsautomat, Tankstellenautomat, Fahrkartenautomat, usw.; der Dienstleistungsautomat z. B. ein Telefonautomat, Kopierautomat, Arbeitszeiterfassungsautomat, Parkieranlagen-Automat, Registrierautomat mit einer Tastatur oder einem Lesegerät für die Eingabe von Warenbezügen in Selbstbedienungsläden, Kantinen u. dgl., Kontrollautomat eines Zutritts- und Informationssystems, u. dgl. sein. Der Kontrollautomat kann aufgrund des Identifikationsmittels z.B. den Zugang zu einem Computer steuern und die jeweilige Betriebszeit erfassen und auf dem Identifikationsmittel registrieren oder zusammen mit einem Türschloss (in Fabriken, Hotels usw.) verwendet werden, um aufgrund des Identifikationsmittels den Zutritt nicht Berechtigter zu bestimmten Räumen bzw. Gebäuden zu verhindern bzw. den Zutritt nur zu bestimmten, Personen bzw. Personengruppen zugeordneten Zeiten zu ermöglichen und zu registrieren, welche Personen den Raum bzw. das Gebäude zu welchen Zeitpunkten betreten und verlassen haben.

## Patentansprüche

1. Verkaufs- und/oder Dienstleistungsautomat mit einer elektronischen Datenverarbeitungseinrichtung (29), die mittels je einem bestimmten Benutzungsberechtigten zugeordneter, Daten tragender Identifikationsmittel (3) ansteuerbar ist, und mit wenigstens einem Eingriffsglied (9), das in den das Identifikationsmittel (3) aufnehmenden Raum (4) hineinragt und in der Art nachgiebig gehalten ist, dass es beim Einführen des Identifikationsmittels (3) von diesem nach oben geschoben wird, um in der Endlage des Identifikationsmittels (3) in eine Aussparung (11) desselben (3) zu greifen, dadurch gekennzeichnet, dass Mittel (19, 20, 25, 27) zur Druckausübung in Eingriffsrichtung auf das Eingriffsglied (9) vorgesehen sind, die von der Datenverarbeitungseinrichtung (29) zur Druckausübung beim Lesen und gegebenenfalls Aendern der Daten des Identifikationsmittels (3) in dessen Endlage steuerbar sind, und dass das Eingriffsglied (9) eine in Einführrichtung abgerundete, konvex in die komplementäre Aussparung des Identifikationsmittels eingreifende und quer zur Einführungsrichtung längliche Form hat, so dass die ausgeübte Druckkraft auf eine verteilte Fläche wirkt, und somit di Möglichkeit des Herausziehens des Identifikationsmittels (3) ohne Beschädigung desselben und des Automaten bei druckbelastetem Eingriffsglied (9) besteht.

2. Automat nach Anspruch 1, dadurch gekennzeichnet, dass das Halteglied (9) im wesentlichen zylindrisch und zwischen parallelen Flächen (12, 13) quer zur Einführungsrichtung des Identifikationsmittels (3) bewegbar angeordnet ist.

3. Automat nach Anspruch 1 oder 2, dadurch gekennzeichnet, dass das Halteglied (9) durch die Wirkung eines von der Datenverarbeitungseinrichtung (29) gesteuerten Elektromagneten, zweckmässig eines Solenoids (27) mit Tauchanker (25), belastbar ist.

4. Automat nach einem der Ansprüche 1 bis 3, dadurch gekennzeichnet, dass ein Verlassen der vorbestimmten Lage des Identifikationsmittels (3) bei belastetem Halteglied (9) ein Signal an die Datenverarbeitungseinrichtung (29) auslöst.

5. Automat nach Anspruch 3 oder 4, dadurch gekennzeichnet, dass der Anker (25) des Magneten (27) an einem Arm (19) eines Hebels angreift, der einen zweiten Arm (20) zum Belasten des Haltegliedes (9) hat.

6. Automat nach einem der Ansprüche 1 bis 5, gekennzeichnet durch die Belastung des Halteglieds (9) in dessen Eingriffslage aufnehmende Stützflächen (17, 18).

7. Automat nach einem der Ansprüche 1 bis 6, dadurch gekennzeichnet, dass der Querschnitt des das Identifikationsmittel aufnehmenden Raumes (4) des Automaten höchstens eine Symmetrieachse hat, z.B. trapezförmig ist, zur Aufnahme von Identifikationsmitteln mit angepasstem Querschnitt, wobei die grössere Abmessung des Querschnitts zweckmässig wenigstens annähernd horizontal ist.

8. Identifikationsmittel (3) zur Benutzung in dem Automaten nach Anspruch 1, mit einem Datenträger (31) für die Daten zum Ansteuern der Datenverarbeitungseinrichtung (29) des Automaten und mit einer Vertiefung (11), in die das Eingriffsglied (9) des Automaten in der Endlage des Identifikationsmittels (3) eingreift, dadurch gekennzeichnet, dass die Vertiefung eine quer zur Einführrichtung des Identifikationsmittels (3) verlaufende Rille (11) mit einem zu der abgerundeten, konvexen Form des Eingriffsgliedes (9) komplementären, konkaven Querschnitt ist.

9. Identifikationsmittel nach Anspruch 8, dadurch gekennzeichnet, dass der Querschnitt eines in den Automaten einzuführenden Teiles (6) des Identifikationsmittels (3) höchstens eine Symmetrieachse hat, beispielsweise trapezförmig ist, zum Einführen dieses Teiles (6) in einen dasselbe aufnehmenden Raum des Automaten mit angepasstem Querschnitt.

**10.** Identifikationsmittel nach Anspruch 8 oder 9, dadurch gekennzeichnet, dass das vorzugsweise aus Kunststoff bestehende Identifikationsmittel (3) eine flache Form mit einem schmäleren, in den Automaten einzuführenden Teil (6), an dessen einer Breitseite (46) die Vertiefung (11) gebildet und an dessen anderer Breitseite der Datenträger (31) versenkt angeordnet ist, und einen breiteren, eine Handhabe (41) bildenden Teil aufweist, die zweckmässig eine längere (43) und eine kürzere Längsseite (42) hat und vorzugsweise neben der längeren (43), bei in seiner vorbestimmten Lage in den Automaten eingeführten Identifikationsmittel (3) rechten Längsseite mit einem Loch (44) zum Anhängen an einen Schlüsselring versehen ist.

**Claims**

1. Selling and/or service point with an electronic data processing means (29) which may be addressed by means of identification means (3) which carry data and are associated with one particular authorized user, and with at least one insertion member (9) which extends into the space (4) which receives the identification means (3) and is held in a resilient manner such that when the identification means (3) is inserted it is pushed upwards by the latter in order to engage with a recess (11) in the identification means (3) in the latter' s final position, characterised in that means (19, 20, 25, 27) are provided for exerting pressure on the insertion' member (9) in the direction of insertion which may be controlled by the data processing means (29) for exerting pressure while reading and optionally changing the data of the identification means (3) in the latter' s final position, and in that the insertion member (9) has a shape which is rounded in the inserting direction, longitudinal in the transverse direction to the inserting direction and engages in a convex manner in the complementary recess of the identification means, such that the pressure force exerted acts on an enlarged surface and thus the possibility consists that the identification means (3) be pulled out again without the latter being damaged nor the point when the insertion member (9) is under pressure stress.

2. Point according to claim 1, characterised in that the holding member (9) is disposed essentially in a cylindrical manner and can be moved between parallel surfaces (12, 13) transversely to the inserting direction of the identification means (3).

3. Point according to claims 1 or 2, characterised in that the holding member (9) can be stressed by the action of an electromagnet, advantageously a solenoid (27) with plunger-type armature, which is controlled by the data processing means (29).

4. Point according to any one of claims 1 to 3, characterised in that, when the identification means (3) leaves its predetermined position while the holding member (9) is stressed a signal to the data processing means (29) is triggered.

5. Point according to claim 3 or 4, characterised in that the armature (25) of the magnet (27) engages on one arm (19) of a lever which is provided with a second arm (20) for stressing the holding member (9).

6. Point according to any one of claims 1 to 5, characterised by supporting surfaces (17, 18) which take the stress of the holding member (9) in the latter' s engaging position.

7. Point according to any one of claims 1 to 6, characterised in that the cross-section of the space (4) of the point which receives the identification means has not more than one symmetrical axis, is trapezoidal for example, in order to receive identification means with adapted cross-section wherein a larger size of the cross-section is advantageously at least approximately transverse.

8. Identification means (3) to be used in the point according to claim 1, with a data carrier (31) for addressing the data processing means (29) of the point and with a recess (11) in which an insertion member (9) of the point engages in the the final position of the identification means (3), characterised in that the recess is a groove (11) which extends transversely to the inserting direction of the identification means (3) and has a concave cross-section which is complementary to the rounded convex shape of the insertion member (9).

9. Identification means according to claim 8, characterised in that the cross-section of one part (6) of the identification means (3) which is to be inserted into the point has not more than one symmetrical axis, has a trapezoidal shape for example, in order to insert the part (6) into a space of the point which space receives the part (6) and has an adjusted cross-section.

10. Identification means according to claims 8 or 9, characterised in that the identification means (3) which preferably consists of synthetic materials comprises a flat shape with a more narrow part (6) which is to be inserted into the point and on one broad side (46) of which there is formed a recess (11) and on the other broad side the data carrier (31) is disposed in a sunken manner, and a broader part which forms a handle (41) which preferably has one longer (43) and one shorter longitudinal side (42) and is advantageously provided adjacent the longer side (43), i.e. the righthand longitudinal side in the case of the identification means (3) being inserted into the point in its predetermined position, with a hole (44) for being attached to a key ring.

**Revendications**

1. Appareil automatique pour la vente et/ou des prestations de services, comprenant un dispositif électronique de traitement de données (29) susceptible d'être piloté par des moyens d'identification (3) portant des données et coordonnés chacun à une personne déterminée autorisée à utiliser l'appareil, et au moins un élément d'engagement (9) qui fait saillie dans l'espace (4) recevant le moyen d'identification (3) et est maintenu élastiquement de manière qu'il soit poussé vers le haut par le moyen d'identification (3) lors de l'introduction de celui-ci, avant de s'engager dans un évidement (11) du moyen d'identification (3) à la position de fin de course de celui-ci (3), caractérisé par des moyens (19, 20, 25, 27), pouvant être commandés par le dispositif de traitement de données (29), pour exercer une pression dans la direction d'introduction de l'élément d'engagement (9), lorsque le moyen d'identification (3) occupe sa position de fin de course, lors de la lecture et éventuellement du changement des données portées par le moyen d'identification (3), et que l'élément d'engagement (9) possède une forme arrondie dans la direction d'introduction, s'engageant par une convexité dans l'évidement complémentaire du moyen d'identification et oblongue transversalement à la direction d'introduction, de sorte que la force de pression exercée agisse sur une surface répartie et que, de ce fait, le moyen d'identification (3) puisse être extrait sans qu'il soit endommagé et sans que l'appareil automatique soit endommagé pendant que l'élément d'engagement (9) est sous pression.

2. Appareil automatique selon la revendication 1, caractérisé en ce que l'élément de retenue (9) est essentiellement cylindrique et est disposé entre des faces parallèles (12, 13) de manière qu'il soit déplaçable transversalement à la direction d'introduction du moyen d'identification (3).

3. Appareil automatique selon la revendication 1 ou 2, caractérisé en ce que l'élément de retenue (9) peut être chargé par l'action d'un électroaimant, commandé par le dispositif de traitement de données (29) et formé avantageusement d'un solénoïde (27) et d'une armature (25).

4. Appareil automatique selon une des revendications 1 à 3, caractérisé en ce qu'un signal envoyé au dispositif de traitement de données (29) est déclenché au cas où le moyen d'identification (3) quitte la position prédéterminée alors que l'élément de retenue (9) est chargé.

5. Appareil automatique selon la revendication 3 ou 4, caractérisé en ce que l'armature (25) du solénoïde (27) attaque un bras (19) d'un levier possédant un deuxième bras (20) pour charger l'élément de retenue (9).

6. Appareil automatique selon une des revendications 1 à 5, caractérisé en ce que l'élément de retenue (9) est chargé, alors qu'il est supporté à sa position d'engagement, par des faces d'appui (17, 18).

7. Appareil automatique selon une des revendications 1 à 6, caractérisé en ce que la section droite de l'espace (4) de l'appareil recevant le moyen d'identification, possède tout au plus un axe de symétrie, la forme de la section droite étant trapézoïdale par exemple, en vue de la réception de moyens d'identification ayant une section droite adaptée, la plus grande dimension de la section droite étant avantageusement au moins à peu près horizontale.

8. Moyen d'identification (3) destiné à être utilisé dans l'appareil automatique selon la revendication 1, possédant un support de données (31) pour les données servant à piloter le dispositif de traitement de données (29) de l'appareil, et présentant un creux (11) dans lequel s'engage l'élément d'engagement (29) de l'appareil lorsque le moyen d'identification (3) occupe la position de fin de course, caractérisé en ce que le creux est une rainure (11) s'étendant transversalement à la direction d'introduction du moyen d'identification (3) et possédant une section droite concave complémentaire à la forme arrondie convexe de l'élément d'engagement (9).

9. Moyen d'identification selon la revendication 8, caractérisé en ce que la section droite d'une partie (6) du moyen d'identification (3) à introduire dans l'appareil, possède tout au plus un axe de symétrie et présente une forme trapézoïdale par exemple, en vue de l'introduction de cette partie (6) dans un espace de l'appareil destiné à la recevoir, ayant une section droite adaptée.

10. Moyen d'identification selon la revendication 8 ou 9, caractérisé en ce qu'il est réalisé de préférence en matière plastique et possède une forme plate avec une partie (6) plus étroite, à introduire dans l'appareil automatique, sur l'un (46) des grands côtés de laquelle est formé le creux (11) et sur l'autre grand côté de laquelle le support de données (31) est encastré, ainsi qu'une partie plus large, formant une partie de maintien (41), possédant avantageusement un côté longitudinal (43) relativement long et un côté longitudinal (42) plus court, de même qu'un trou (44) pour accrocher le moyen d'identification (3) à un porte-clé, trou qui jouxte de préférence le côté longitudinal (43) plus long, lequel est le côté droit lorsque le moyen d'identification (3) a été introduit à sa position prédéterminée dans l'appareil automatique.

FIG. 1

FIG. 2

FIG. 3

FIG. 4

FIG. 5

FIG. 6